# EUROPEAN PATENT SPECIFICATION

(11) **EP 4 718 368 B1**
(45) Date of publication and mention of the grant of the patent: **18.11.2026**
(21) Application number: 25204759.2
(22) Date of filing: 25.09.2025
(51) Int. Cl.: G06T 3/10

(54) **IMAGE PROCESSING METHOD, ELECTRONIC DEVICE, AND MEDIUM**
BILDVERARBEITUNGSVERFAHREN, ELEKTRONISCHE VORRICHTUNG UND MEDIUM
PROCÉDÉ DE TRAITEMENT D'IMAGE, DISPOSITIF ÉLECTRONIQUE ET SUPPORT

(30) Priority: 26.09.2024 CN 202411351464
(43) Date of publication of application: 01.04.2026
(73) Proprietor: Nothing Technology Limited, London WC1X 8BH (GB)
(72) Inventor: Yunpin, LIN, 115023 Taipei City (TW)
(74) Representative: EIP

(56) References cited:
- JP-A- 2007 124 234
- JP-A- S60 236 363
- JP-A- S60 236 365
- ANONYMOUS: "Randomized halftone effect - Graphic Design Stack Exchange", 28 September 2023 (2023-09-28), pages 1 - 7, XP093362568, Retrieved from the Internet <URL:https://graphicdesign.stackexchange.com/questions/162268/randomized-halftone-effect>

## Description

### TECHNICAL FIELD

This disclosure relates to the field of multimedia technology, and particularly, to an image processing method, an electronic device, and a medium.

### BACKGROUND

Image files can be displayed on various displayers to create rich visual effects or to convey information efficiently. However, image data is usually large, which brings certain pressure to transmission and display processes, and there may also be certain software and hardware compatibility issues between displayers and image files.

### SUMMARY

To solve the problems in the related art, an image processing method, an electronic device, and a medium are provided in embodiments of the present disclosure. JP S60 236365 A relates to a halftone display method which arranges output dots in a pattern that approximates the concentration distribution of input pixels within a dot matrix. JP S60 236363 A relates to a halftone display method for displaying grayscale images on devices that can only print dots. JP 2007 124234 A relates to an information processor and a woven pattern printing method where either a latent image or background is printed with a single colour material while the other is printed with multiple colour materials in a predetermined ratio, and different processing methods are applied to the latent image and the background.

In an aspect of embodiments of the present disclosure, an image processing method is provided. The image processing method includes the following. A target image is obtained, and the target image is converted into a dot matrix image. The dot matrix image includes multiple dots, and the dot matrix image presents features of the target image through sizes of the multiple dots.

In another aspect of embodiments of the present disclosure, an image processing method is provided. The image processing method includes the following. A target image is obtained, the target image including features, and the target image is converted into a dot matrix image. The dot matrix image includes multiple dots, and the dot matrix image represents the features of the target image using sizes of the multiple dots.

According to the embodiments of the present disclosure, the target image is converted into the dot matrix image as follows. The target image is divided into multiple target regions. A number of the multiple target regions is same as a number of the multiple dots in the dot matrix image, and the multiple target regions correspond to the multiple dots in the dot matrix image in one-to-one correspondence. For each of the multiple target regions, a size of a dot in the dot matrix image corresponding to a target region is determined based on a pixel in the target region.

According to the embodiments of the present disclosure, the target image is converted into the dot matrix image as follows. The target image is divided into multiple target regions. A number of the multiple target regions is same as a number of the multiple dots in the dot matrix image, and the multiple target regions correspond to the multiple dots in the dot matrix image in one-to-one correspondence. For each of the multiple target regions, a size of a dot in the dot matrix image corresponding to a target region is determined based on a characteristic of one of more pixels in the target region.

According to the embodiments of the present disclosure, the target image is a grayscale frame. Or, the method further includes the following. The target image is converted into the grayscale frame when the target image is a color frame.

According to the embodiments of the present disclosure, the target image is a grayscale frame. Or, the method further includes the following. The target image is converted into the grayscale frame when the target image is a color image.

According to the embodiments of the present disclosure, the size of the dot in the dot matrix image corresponding to the target region is determined based on the pixel in the target region by determining the size of the dot in the dot matrix image corresponding to the target region based on a grayscale value of the pixel in the target region.

According to the embodiments of the present disclosure, the size of the dot in the dot matrix image corresponding to the target region is determined by determining whether the target region is a foreground region or a background region. The size of the dot corresponding to the target region is determined as a first size when the target region is the background region, where the first size is a fixed value. The size of the dot corresponding to the target region is determined as a second size when the target region is the foreground region, where the second size is different from the first size.

According to the embodiments of the present disclosure, the second sizes corresponding to different target regions that are foreground regions are same or different.

According to the embodiments of the present disclosure, the second sizes corresponding to different target regions that are foreground regions are the same as, or different from each other.

According to the embodiments of the present disclosure, whether the target region is the foreground region or the background region is determined based on the grayscale value of the pixel in the target region.

According to the embodiments of the present disclosure, whether the target region is the foreground region or the background region is determined based on the grayscale value of the pixel in the target region as follows. Whether the target region is the foreground region or the background region is determined based on a grayscale value of a central pixel in the target region. Or, whether the target region is the foreground region or the background region is determined based on a mean of grayscale values of pixels in the target region.

According to the embodiments of the present disclosure, whether the target region is the foreground region or the background region is determined as follows. A grayscale value of each of pixels in the target region is compared with a grayscale threshold, and a number of the pixels with grayscale values greater than the grayscale threshold is determined. A ratio of the number of pixels with the grayscale values greater than the grayscale threshold to a total number of the pixels in the target region is determined. Whether the target region is the foreground region or the background region is determined based on a comparison between the ratio and a ratio threshold.

According to the embodiments of the present disclosure, when the target region is the foreground region, the size of the dot in the dot matrix image corresponding to the target region is in a positive correlation or a negative correlation with a feature grayscale value. The feature grayscale value is the grayscale value of the central pixel in the target region or a mean of grayscale values of pixels in the target region.

According to the embodiments of the present disclosure, the size of the dot in the dot matrix image corresponding to the target region is determined based on the pixel in the target region as follows. The background region of the target image is identified. Whether the target region is the foreground region or the background region is determined based on a ratio of a number of pixels in the target region which are in the background region to a total number of pixels in the target region. The size of the dot in the dot matrix image corresponding to the target region is determined by whether the target region is the foreground region or the background region. The background region corresponds to a fixed first size, and the foreground region corresponds to a fixed or variable second size, and the second size is larger or smaller than the first size.

According to the embodiments of the present disclosure, the size of the dot in the dot matrix image corresponding to the target region is determined based on the characteristic of the one or more pixels in the target region as follows. The background region of the target image is identified. Whether the target region is the foreground region or the background region is determined based on a ratio of a number of pixels in the target region which are in the background region to a total number of pixels in the target region. The size of the dot in the dot matrix image corresponding to the target region is determined by whether the target region is the foreground region or the background region. The background region corresponds to a fixed first size, and the foreground region corresponds to a fixed or variable second size, and the second size is larger or smaller than the first size.

According to the embodiments of the present disclosure, the image processing method further includes the following. Video data is obtained, and the target image is obtained from the video data. The target image is at least one image frame in the video data.

According to the embodiments of the present disclosure, the image processing method further includes the following. The dot matrix image is saved or transmitted. Or, an animation is presented based on multiple dot matrix images.

According to the embodiments of the present disclosure, the image processing method further includes the following. An input on a touch screen from a user is received, and multiple target dots around a position touched by the user is determined. A variation effect is presented based on the multiple target dots.

According to the embodiments of the present disclosure, when the target region is the background region, a target dot is of the first size. When the target region is the foreground region, the target dot is of the second size, and the second size is larger than the first size. The variation effect is presented based on the multiple target dots as follows. When a region corresponding to the target dot is the background region, a size of the target dot gradually changes from a third size to the first size, where the third size is larger than the first size. Or, when the region corresponding to the target dot is the foreground region, the size of the target dot gradually changes from a fourth size to the second size, where the fourth size is smaller than the second size.

According to the embodiments of the present disclosure, the variation effect is presented based on the multiple target dots as follows. The target dot is added into an animation list when the target dot is not in the animation list, and a dot animation is executed, where the size of the target dot continuously changes in the dot animation. The target dot is removed from the animation list after the dot animation ends.

According to the embodiments of the present disclosure, when the target region is the background region, the target dot is of the first size. When the target region is the foreground region, the target dot is of the second size, and the second size is larger than the first size. The size of the target dot continuously changes as follows. When the region corresponding to the target dot is the background region, the size of the target dot gradually changes from the third size to the first size, where the third size is larger than the first size. Or, when the region corresponding to the target dot is the foreground region, the size of the target dot gradually changes from the fourth size to the second size, where the fourth size is smaller than the second size.

In another aspect of embodiments of the present disclosure, an electronic device is provided. The electronic device includes at least one processor and a memory communicatively connected to the at least one processor. The memory is configured to store instructions which are able to be executed by the at least one processor. The instructions, when executed by the at least one processor, cause the at least one processor to implement the aforementioned method.

In another aspect of embodiments of the present disclosure, a computer-readable storage medium is provided. The computer-readable storage medium has computer-readable instructions stored thereon. The computer-readable instructions, when executed by a processor, cause the processor to implement the aforementioned method.

In another aspect of embodiments of the present disclosure, a computer program is provided. The computer program, when executed by a processor, cause the processor to implement the aforementioned method.

In another aspect of embodiments of the present disclosure, a computer program is provided. The computer program, when executed by a computer, cause the computer to implement the aforementioned method.

In another aspect of embodiments of the present disclosure, an electronic device is provided. The electronic device includes multiple light-emitting units arranged in a matrix, an image processing unit, and a light-emitting control unit. The image processing unit is configured to implement the aforementioned method to obtain a dot matrix image. The light-emitting control unit is configured to control the multiple light-emitting units to emit light based on information in the dot matrix image.

According to the embodiments of the present disclosure, dots in the dot matrix image correspond to the multiple light-emitting units in one-to-one correspondence. The light-emitting control unit is configured to control a corresponding light emitting unit not to emit light by identifying a dot in the dot matrix image for representing a background region. The light-emitting control unit is configured to control a corresponding light-emitting unit to emit light by identifying a dot in the dot matrix image for representing a foreground region.

According to the embodiments of the present disclosure, the light-emitting control unit is configured to control the multiple dot matrix images to be played to form an animation effect.

According to the embodiments of the present disclosure, by converting the target image into the dot matrix image, an image content can be presented through the dot matrix image. An amount of information used to record the dot matrix image is relatively less, reducing a pressure of image data transmission and display. The dot matrix image has a low requirement for a hardware of a displayer, reducing a possibility of incompatibility with the hardware. Moreover, a dot matrix image file can be easily extended to different platforms, achieving a low development cost.

### BRIEF DESCRIPTION OF THE DRAWINGS

Other features, purposes, and advantages of the present disclosure will become more apparent from the following detailed description of non-limiting embodiments when taken in conjunction with the accompanying drawings. In the accompanying drawings:
FIG. 1 schematically illustrates a flowchart of an image processing method according to embodiments of the present disclosure.
FIG. 2 schematically illustrates a schematic diagram of a target image according to embodiments of the present disclosure.
FIG. 3 schematically illustrates a schematic diagram of a dot matrix image according to embodiments of the present disclosure.
FIG. 4 schematically illustrates a schematic diagram of a target image according to another embodiment of the present disclosure.
FIG. 5 schematically illustrates a schematic diagram of a dot matrix image according to another embodiment of the present disclosure.
FIG. 6 schematically illustrates a schematic diagram of an interactive state of a dot matrix image according to embodiments of the present disclosure.
FIG. 7 schematically illustrates a structural schematic diagram of a computer system suitable for implementing the image processing method according to embodiments of the present disclosure.

### DETAILED DESCRIPTION

Exemplary embodiments of the present disclosure will be described in detail with reference to the accompanying drawings in the following, so as to make it easier for those skilled in the art to implement them. In addition, parts that are not related to the description of exemplary embodiments are omitted in the drawings for clarity.

In the present disclosure, it can be understood that terms such as "include" or "have", etc., are intended to indicate the existence of features, numbers, steps, operations, elements, parts, or combinations thereof disclosed in the present description, and are not intended to preclude the possibility that one or more other features, numbers, steps, operations, elements, parts, or combinations thereof exist or are added.

In addition, it may be noted that, in a case of no conflict, the embodiments in the present disclosure and the features in the embodiments may be combined with each other. The present disclosure will be described in detail with reference to the accompanying drawings and embodiments in the following.

An image processing method is provided in embodiments of the present disclosure. The image processing method includes the following. A target image is obtained, and the target image is divided into multiple target regions to generate a dot matrix image. The dot matrix image includes multiple dots, and the number of the multiple target regions is same as the number of the multiple dots in the dot matrix image, and the multiple target regions correspond to the multiple dots in the dot matrix image in one-to-one correspondence. For each of the multiple target regions, a size of a dot in the dot matrix image corresponding to a target region is determined based on a pixel in the target region. The technical solutions provided by the various embodiments of the present disclosure will be elaborated in detail in conjunction with the accompanying drawings in the following.

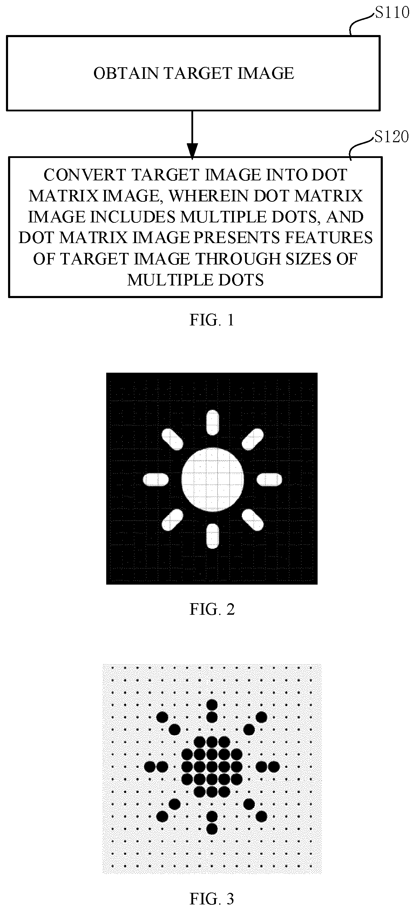

FIG. 1 schematically illustrates a flowchart of an image processing method according to the embodiments of the present disclosure.

As illustrated in FIG. 1, the image processing method includes an operation at S110 and an operation at S 120.

At S110, a target image is obtained.

At S 120, the target image is converted into a dot matrix image. The dot matrix image includes multiple dots, and the dot matrix image presents features of the target image through sizes of the multiple dots.

According to the embodiments of the present disclosure, the target image may be an individual image or an image frame obtained from video data. That is, the method may further include the following. Video data is obtained, and the target image is obtained from the video data, where the target image is at least one image frame in the video data. The video data, such as a video file in mp4 format, may include multiple image frames, or may be decoded into multiple image frames. For example, MediaMetadataRetriever may be used to decode the video data into frame-by-frame images, which are then saved in frameInfos.

FIG. 2 schematically illustrates a schematic diagram of a target image according to the embodiments of the present disclosure. The target image includes a dark-colored background and a light-colored sun pattern. The dot matrix image illustrated in FIG. 2 presents features of the target image through a size of a dot. By converting the target image into the dot matrix image, an image content can be presented through multiple dot matrix images. An amount of information used to record a dot matrix image is relatively less, reducing a pressure of image data transmission and display. The dot matrix image has a low requirement for a hardware of a displayer, reducing a possibility of incompatibility with the hardware. Moreover, a dot matrix image file can be easily extended to different platforms, achieving a low development cost.

According to the embodiments of the present disclosure, operation at S120 may include the following. The target image is divided into multiple target regions, where the number of the multiple target regions is the same as the number of the multiple dots in the dot matrix image, and the multiple target regions correspond to the multiple dots in the dot matrix image in one-to-one correspondence. For each of the target regions, the size of the dot in the dot matrix image corresponding to the target region is determined based on the pixel in the target region.

According to the embodiments of the present disclosure, the target image may be divided into the multiple target regions in various methods. As illustrated in FIG. 2, the target image may be divided into multiple square target regions arranged in m rows and n columns by grid lines. Alternatively, the target image may also be divided into multiple target regions in shapes of triangles, rectangles, parallelograms, hexagons, etc. According to the embodiments of the present disclosure, before implementing the aforementioned division methods, a boundary width may also be defined to exclude a boundary region with little significance. Since a size of the region and an image boundary may both be adjusted, the flexibility and adjustability of the dot matrix image are ensured.

According to the embodiments of the present disclosure, the dot matrix image includes multiple dots, and the number of the multiple target regions is the same as the number of the multiple dots in the dot matrix image, and the multiple target regions correspond to the multiple dots in the dot matrix image in one-to-one correspondence. FIG. 3 schematically illustrates a schematic diagram of a dot matrix image according to the embodiments of the present disclosure. The dot matrix image illustrated in FIG. 3 is consist of multiple dots, and each of the multiple dots corresponds to one region of the target image illustrated in FIG. 2.

According to the embodiments of the present disclosure, for each target region, the size of the dot in the dot matrix image corresponding to the target region is determined based on the pixel in the target region. With the aforementioned technical features, the dot matrix image can present an image feature of the target image through a size feature of the dot. For example, in FIG. 3, a size of a dot in a target region corresponding to a light-colored sun pattern is different from a size of a dot in a target region corresponding to a dark-colored background, thereby presenting a visual effect similar to a sun pattern illustrated in FIG. 2.

According to technical solutions of the embodiments of the present disclosure, compared with complete data of the target image, only a small number of parameters about the size of the dot is stored and transmitted by the dot matrix image; and a similar image effect can be presented without a need for data of grayscale or color. The dot matrix image is applicable to various display devices, especially for a light-emitting module, such as a light emitting diode (LED) array. Moreover, with a simple data structure, the dot matrix image can be easily ported to different platforms, achieving a low development cost.

According to the embodiments of the present disclosure, the target image may be a grayscale frame or a color frame, and the dot matrix image may or may not carry color information. In some embodiments, the dots of the dot matrix image do not carry color information, and all dots may use the same color when being displayed. In this case, grayscale information in the grayscale frame or the color information in the color frame may be converted into size information of the dot. Since the size of the dot is a one-dimensional variable, the color frame may be converted into the grayscale frame to determine the size of the dot. The color frame may be converted into the grayscale frame by a weighted average method. For example, for an RGB image, a grayscale value can be calculated by "red × 0.299 + green × 0.587 + blue × 0.114".

According to the embodiments of the present disclosure, a target image with a relatively-obvious difference in a foreground color and a background color is more suitable for the method of the embodiments of the present disclosure, such as a target image in which a foreground color is close to black and a background color is close to white, or a target image in which a foreground color is close to white and a background color is close to black.

According to the embodiments of the present disclosure, the size of the dot in the dot matrix image corresponding to the target region may be determined by determining whether the target region is a foreground region or a background region. When the target region is the background region, the size of the dot corresponding to the target region is determined as a first size, where the first size is a fixed value. When the target region is the foreground region, the size of the dot corresponding to the target region is determined as a second size, where the second size is different from the first size. For example, a trained artificial intelligence model, such as a neural network, especially a convolutional neural network, can be used to identify the foreground region and/or the background region of the target image. Traditional image processing technologies, such as a gradient calculation, can also be used to identify the foreground region of the target image and/or the background region of the target image. Alternatively, the foreground region of the target image or the background region of the target image can be determined based on the grayscale information of the pixel. After identification, the pixel in the foreground region of the target image and the pixel in the background region of the target image can be determined, thereby further determining whether the target region is the foreground region or the background region. When the target region is the background region, the size of the dot corresponding to the target region can be determined as the first size, where the first size is the fixed value. When the target region is the foreground region, the size of the dot corresponding to the target region can be determined as the second size, where the second size is different from the first size.

According to the embodiments of the present disclosure, the size of the dot in the dot matrix image corresponding to the target region is determined based on the pixel in the target region by determining the size of the dot in the dot matrix image corresponding to the target region based on a grayscale value of the pixel in the target region. In a same dot matrix image, unless the target image is a pure-color image or an image close to a pure color, the sizes of the dots corresponding to different target regions are usually different. Determining the sizes of the dots in the dot matrix images based on different grayscale values can reflect shape features contained of the target image.

For example, as illustrated in FIG. 2, the grayscale values of the pixels in the dark-colored background region are relatively small, while the grayscale values of the pixels in the light-colored foreground region (a part of the sun pattern) are relatively large. Thus a grayscale threshold can be set to distinguish the foreground region from the background region. Dots in the dot matrix image illustrated in FIG. 3 corresponding to background regions are all small dots of the same size, that is, the first size may be a relatively-small size; dots in the dot matrix image illustrated in FIG. 3 corresponding to foreground regions are large dots different from other small dots, that is, the second size may be a relatively-large size. It can be understood that as long as the sizes of the dots in foreground and the sizes of the dots in background are different, a visual effect of a pattern of the target image can be presented. Therefore, the second size may also be smaller than the first size.

According to the embodiments of the present disclosure, the dot may be a circular dot or may be in other shapes. In embodiments of the circular dot, the size of the dot may be a radius or a diameter of the circular dot.

According to the embodiments of the present disclosure, the sizes of all dots or the sizes of part of the dots may be recorded in the dot matrix image. Since the sizes of the dots corresponding to the background regions are the same, the dot matrix image may only record the sizes and positions of the dots corresponding to the foreground regions. For example, (4, 8, 30. 6) may represent that a size of a dot at a coordinate (4, 8) is 30.6 px. Further, due to a limited number of the pixels, a two-dimensional coordinate can be converted into a one-dimensional coordinate according to certain rules. For example, (140, 30.6) represents that the size of the dot at the 140th position is 30.6 px. The aforementioned is an example of a target region with 17×17 pixels. 140 corresponds to an x value of 140%17 = 4, and a y value of 140/17 = 8. A two-dimensional coordinate of an upper left corner of the image is (0, 0), and 140 represents a position of a grid at the fifth from the upper left corner to the right and then the ninth down. In this way, a data volume of the dot matrix image can be further reduced.

According to the embodiments of the present disclosure, the second sizes corresponding to different target regions that are foreground regions are same or different. In the dot matrix image illustrated in FIG. 3, the sizes of the dots corresponding to the foreground regions of the part of the sun pattern are the second sizes, and the dots have a same size. In other embodiments of the present disclosure, the second sizes corresponding to different target regions that are foreground regions may also be different, thereby enabling more information of the target image to be presented.

According to the embodiments of the present disclosure, whether the target region is the foreground region or the background region may be determined based on the grayscale value of the pixel in the target region by determining whether the target region is the foreground region or the background region based on a grayscale value of a central pixel in the target region. For example, a target region may contain 9×9 pixels, then a central pixel is a pixel at the 5th row and the 5th column in the target region. The central pixel may serve as a representative of the target region to determine whether the target region as a whole is the foreground region or the background region. For example, in a case when the background is black and the foreground is white, if the grayscale value of the central pixel is 255 (i.e., white color), the target region may be determined to be the foreground region.

According to embodiments of the present disclosure, whether the target region is the foreground region or the background region may also be determined based on the grayscale value of the pixel in the target region by determining whether the target region is the foreground region or the background region based on a mean of grayscale values of pixels in the target region. For example, for a target region with 9×9 pixels, the mean of the grayscale values of 81 pixels can be determined to determine whether the target region is the foreground region or the background region. Assuming there are 72 pixels with a grayscale value of 255 (i.e., white color) and 9 pixels with a grayscale value of 0 (i.e., black color), then a mean value can be calculated as (255×72 + 0×9)/81 = 227. When the background is black and the foreground is white, the mean value is determined to be closer to a foreground color 255 by a grayscale threshold, thus the entire target region is determined as the foreground region. A specific setting of the grayscale threshold can be determined in advance based on a certain number of experiments.

According to the embodiments of the present disclosure, whether the target region is the foreground region or the background region may also be determined based on the grayscale value of the pixel in the target region as follows. A grayscale value of each of pixels in the target region is compared with the grayscale threshold, and the number of pixels with grayscale values greater than the grayscale threshold is determined. A ratio of the number of pixels with the grayscale values greater than the grayscale threshold to a total number of the pixels in the target region is determined. Whether the target region is the foreground region or the background region is determined based on a comparison between the ratio and a ratio threshold. For example, when the background is black and the foreground is white, the grayscale threshold can be set as 60, for instance. The grayscale values of 81 pixels arranged in a 9×9 matrix in a target region are respectively compared with the grayscale threshold to obtain comparison results. Assuming 63 out of the 81 pixels have grayscale values greater than 60, and 18 out of the 81 pixels have grayscale values less than 60, then a ratio of the number of pixels with the grayscale values greater than the grayscale threshold to a total number of the pixels in the target region can be calculated as 63/81 = 78%. The ratio is compared with the ratio threshold, which is 30% for example. Since 78% > 30%, the target region is determined to be the foreground region. Similarly, a ratio of the number of pixels with the grayscale values less than the grayscale threshold to a total number of the pixels in the target region can be determined for a comparison with the ratio threshold.

According to embodiments of the present disclosure, the aforementioned three methods for determining the foreground region or the background region may be used individually or may be used in combination. For example, the central pixel may be considered together with a mean value of the pixels at the same time; or, the central pixel or the mean value of the pixels may be considered together with a ratio of the numbers of the pixels. In a case of two or three methods for determining being used, a logical AND can be used for determining, or weights can be assigned to each result for a weighting calculation to obtain a final determining result. For example, when the background is black and the foreground is white, after preliminarily determining that the target region is the foreground region based on the central pixel, if the ratio of the number of the pixels with grayscale values greater than the grayscale threshold to the total number of the pixels in the target region is less than the ratio threshold, the target region is considered not to be the foreground region. In this example, two determining methods are combined through using the logical AND, which can also be understood as a ratio serving as an exclusion condition for a preliminary determining result, excluding the target region from being determined as the foreground region.

According to the embodiments of the present disclosure, when the target region is the foreground region, the size of the dot in the dot matrix image corresponding to the target region is in a positive correlation or a negative correlation with a feature grayscale value, where the feature grayscale value is a grayscale value of a central pixel in the target region or a mean of grayscale values of pixels in the target region. According to the embodiments of the present disclosure, a difference in the grayscale values in the background regions and the foreground regions may be in a positive correlation with a difference in the sizes of the dots corresponding to the background regions and the foreground regions respectively, that is, the greater the difference in the grayscale values is, the greater the difference in the sizes of the dots is, and vice versa. For example, if the dots corresponding to the background regions in the dot matrix image are small-sized dots and the background is black, the greater the feature grayscale value of the foreground region (i.e. the closer to white), the larger the size of the dot corresponding to the foreground region. Thus more information of the target image can be represented, and an accuracy and a visual effect of the dot matrix image are ensured.

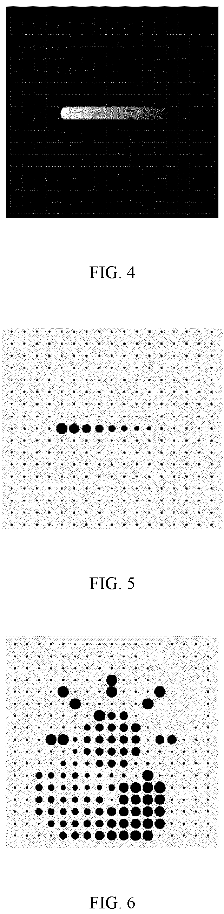

FIG. 4 schematically illustrates a schematic diagram of a target image according to another embodiment of the present disclosure, and FIG. 5 schematically illustrates a schematic diagram of a dot matrix image according to another embodiment of the present disclosure. As illustrated in FIG. 4, a background of the target image is dark-colored, and a foreground is light-colored. Feature grayscale values of multiple foreground regions decrease from left to right. Thus the target image may be a frame of an image in a video where a white dot moves from right to left. The dot matrix image converted from the target image in FIG. 4 is illustrated in FIG. 5. Sizes of dots corresponding to background regions are relatively-small first sizes, and sizes of dots corresponding to foreground regions are second sizes larger than the first sizes, but the multiple second sizes are not the same. Moreover, the brighter the target region is, the larger the size of the corresponding dot is.

As mentioned above, in addition to the aforementioned method of converting the target image into the dot matrix image based on the grayscale value, other image processing technologies may also be used to identify the foreground region and the background region for converting the target image into the dot matrix image.

According to embodiments of the present disclosure, the size of the dot in the dot matrix image corresponding to the target region is determined based on the pixel in the target region as follows. The background region of the target image is identified. whether the target region is the foreground region or the background region is determined based on a ratio of a number of pixels in the target region which are in the background region to a total number of pixels in the target region. The size of the dot in the dot matrix image corresponding to the target region is determined based on whether the target region is the foreground region or the background region, where the background region corresponds to a fixed first size, and the foreground region corresponds to a fixed or variable second size, and the second size is larger or smaller than the first size.

For example, a trained artificial intelligence model, such as a neural network, especially a convolutional neural network, can be used to identify the foreground region and/or the background region of the target image. Traditional image processing technologies, such as a gradient calculation, can also be used to identify the foreground region and/or the background region of the target image. After identification, the pixel in the foreground region of the target image and the pixel in the background region of the target image can be determined. For each target region, a ratio of a number of pixels in the target region which are in the foreground region to the total number of the pixels in the target region, or a ratio of the number of pixels in the target region which are in the background region to the total number of the pixels in the target region, can be calculated. The target region may be determined to be the foreground region or the background region based on the ratio threshold. The size of the dot corresponding to the foreground region and the size of the dot corresponding to the background region may be determined based on whether the target region is the foreground region or the background region.

According to the embodiments of the present disclosure, the image processing method further includes that the dot matrix image is saved or transmitted. The device implementing the aforementioned image processing method in the embodiments of the present disclosure may or may not have a display unit. For example, the image processing method can be applied to a server. After converting video data into multiple dot matrix images, the server may save the multiple dot matrix images for use when needed, or may send the multiple dot matrix images to a device with a display unit for displaying the multiple dot matrix images. The device with the display unit may be a terminal device, such as a mobile phone, a personal computer, etc. The image processing method may also be applied to a terminal device. After converting video data into the multiple dot matrix images, the terminal device may save the multiple dot matrix images locally or in cloud, share the dot matrix images, display the dot matrix images, or present an animation based on the multiple dot matrix images. For example, a terminal device can read a JSON file to parse the information therein, draw the dot matrix images by using canvas.drawCircle, and compose the dot matrix images into an animation by using AnimationDrawable.

According to the embodiments of the present disclosure, the dot matrix image can be saved as a file in JSON format, which records various information after converting the video data, such as a length and a width of an image, a boundary, a number of grids, a foreground color and a background color, a coordinate and a size of a dot in a foreground region, etc. The JSON file not only runs well on an Android platform but also can be easily ported to other platforms, such as an IOS platform. Therefore, such solution is conducive to cross-platform development and achieving a function of converting a video into a dot animation, thereby providing users with a wider range of usage experiences. An exemplary video data size is 2.4 Mb, and a size of a converted JSON file is only 316.2 kb, which saves resources for storage, computing, and transmission.

In the embodiments of the present disclosure, a display of the dot matrix image can support a user interaction to improve a user experience. According to the embodiments of the present disclosure, when displaying the dot matrix image or a dot matrix animation, the image processing method may further include the following. An input on a touch screen from a user is received, and multiple target dots around a position touched by the user is determined. A variation effect is presented based on the multiple target dots. FIG. 6 schematically illustrates a schematic diagram of an interactive state of a dot matrix image according to the embodiments of the present disclosure. Based on the dot matrix image of the sun pattern illustrated in FIG. 3, when a user touches a screen or even swipes a finger across the screen, an interactive effect may be displayed. FIG. 6 illustrates a state at a certain moment during a variation of the interactive effect.

According to the embodiments of the present disclosure, when the target region is the background region, a target dot is of the first size; when the target region is the foreground region, the target dot is of the second size, where the second size is larger than the first size. A variation effect is presented based on the multiple target dots as follows. When a region corresponding to a target dot is the background region, the size of the target dot gradually changes from a third size to the first size, where the third size is larger than the first size. Or, when a region corresponding to a target dot is the foreground region, the size of the target dot gradually changes from a fourth size to the second size, where the fourth size is smaller than the second size. That is, when the user swipes the finger across a relatively-large-sized dot, the dot gradually expands from a smaller size until it returns to its original size; when the user swipes the finger across a relatively-small-sized dot, the dot gradually shrinks from a larger size until it returns to its previous size. In some embodiments, when shrinking, a radius can first decrease to 0 and then increase to a previous size.

According to the embodiments of the present disclosure, the variation effect is presented based on the multiple target dots as follows. When the target dot is not in an animation list, the target dot is added into the animation list and a dot animation is executed, where the size of the target dot continuously changes in the dot animation. The target dot is removed from the animation list after the dot animation ends. For example, the terminal device can record positions across which the finger swiped by using onTouchEvent to capture a trajectory of a finger swiping. The dots in a range expanding one circle outwards from a coordinate of a dot at which the finger presses are newly-added dots, and coordinates of the newly-added dots are recorded in the animation list. Each time the finger swipes, only dots that are not yet in the animation list are added. After an animation effect of a dot in the animation list ends, the dot is removed from the animation list, which can achieve a better visual effect.

An electronic device is provided in another aspect of embodiments of the present disclosure. The electronic device includes multiple light-emitting units arranged in a matrix, an image processing unit, and a light-emitting control unit. The image processing unit is configured to implement the aforementioned method to obtain a dot matrix image, and the light-emitting control unit is configured to control the plurality of light-emitting units to emit light based on information in the dot matrix image. For example, the electronic device can be an LED lamp array or another device containing an LED lamp array, such as a mobile phone containing an LED lamp array. One side of the mobile phone is provided with a screen, and an opposite side to the screen, usually being referred to as a back, may be provided with an LED lamp array. The mobile phone can use the LED lamp array on the back to present a dot matrix animation, enriching functions of a mobile phone and improving a user experience.

According to the embodiments of the present disclosure, dots in the dot matrix image correspond to multiple light-emitting units in one-to-one correspondence. The light-emitting control unit is configured to control a corresponding light-emitting unit not to emit light by identifying a dot in the dot matrix image for representing a background region, and the light-emitting control unit is configured to control a corresponding light-emitting unit to emit light by identifying a dot in the dot matrix image for representing a foreground region. Taking FIG. 3 as an example, each of dots in the dot matrix image illustrated in FIG. 3 corresponds to one light-emitting unit, such as an LED lamp bead. The part of the sun pattern is the foreground region, and LED lamp beads corresponding to the foreground part emit light; the other part is the background part, and LED lamp beads corresponding to the background part do not emit light. In this way, various shapes of the target image from the video data can be displayed through a light-emitting array.

According to the embodiments of the present disclosure, the light-emitting control unit is configured to control the multiple dot matrix images to be played to form an animation effect. When light effects corresponding to the multiple dot matrix images are continuously played, a presenting time of each of the multiple dot matrix images lasts for 0.2 second for example, thus a continuous animation effect is formed, presenting a richer content and improving a user experience.

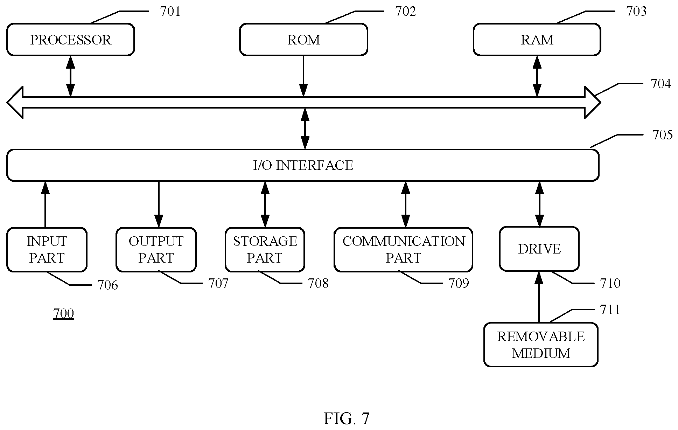

FIG. 7 schematically illustrates a structural schematic diagram of a computer system suitable for implementing the image processing method according to the embodiments of the present disclosure.

As illustrated in FIG. 7, a computer system 700 includes a processor 701, which can execute various processes in the aforementioned embodiments according to a program stored in a read-only memory (ROM) 702 or a program loaded into a random access memory (RAM) 703 from a storage part 708. In the RAM 703, various programs and data required for the operation of the computer system 700 are also stored. The processor 701, the ROM 702, and the RAM 703 are connected to each other through a bus 704. An input/output (I/O) interface 705 is also connected to the bus 704.

The following components are connected to the I/O interface 705. An input part 706 including a keyboard, a mouse, etc.; an output part 707 including a cathode ray tube (CRT), a liquid crystal display (LCD), a speaker, etc.; a storage part 708 including a hard disk, etc.; and a communication part 709 including a network interface card such as a LAN card, a modulator-demodulator (modem), etc. The communication part 709 implements communication processing via a network such as an Internet. A drive 710 is also connected to the I/O interface 705 as needed. A removable medium 711, such as a magnetic disk, an optical disk, a magneto-optical disk, a semiconductor memory, etc., is installed on the drive 710 as needed, so that a computer program read therefrom is installed into the storage part 708 as needed. The processor 701 can be implemented as a processing unit such as a central processing unit (CPU), a graphic processing unit (GPU), a Tensor Processing Unit (TPU), a field-programmable gate array (FPGA), or a neural processing unit (NPU).

Specifically, according to the embodiments of the present disclosure, the aforementioned methods can be implemented as computer software programs. For example, the embodiments of the present disclosure include a computer program product, which includes a computer program tangibly embodied on a machine-readable medium, and the computer program contains a program code for executing the aforementioned methods. In such embodiments, the computer program may be downloaded and installed from the network through the communication part 709, and/or may be installed from the removable medium 711.

The flowcharts and the block diagrams in the accompanying drawings illustrate the system architectures, functions, and operations of possible implementations of systems, methods, and computer program products according to various embodiments of the present disclosure. In this regard, each block in the flowcharts or the block diagrams may represent a module, a program segment, or a part of code, which includes one or more executable instructions for implementing specified logical functions. It may also be noted that, in some alternative implementations, functions noted in blocks may also occur out of an order noted in the accompanying drawings. For example, two blocks illustrated in succession may actually be executed substantially concurrently, or may sometimes be executed in a reverse order, depending upon the functions involved. It may also be noted that each block in the block diagrams and/or the flowcharts, and combinations of the blocks in the block diagrams and/or the flowcharts, can be implemented by a dedicated hardware-based system implementing specified functions or operations, or by a combination of a dedicated hardware and computer instructions.

The units or the modules involved in the embodiments of the present disclosure may be implemented by a software, and may be implemented by a programmable hardware. The units or the modules may also be provided in a processor, and names of the units or the modules do not constitute a limitation on the units or the modules themselves in a certain case.

As another aspect, a computer-readable storage medium is also provided in the present disclosure. The computer-readable storage medium may be a computer-readable storage medium included in the electronic device or the computer system in the aforementioned embodiments; or may be a computer-readable storage medium that exists independently and is not installed into a device. The computer-readable storage medium stores one or more programs, and the one or more programs are used by one or more processors to execute the methods in the embodiments of the present disclosure.

## Claims

1. An image processing method, comprising:
obtaining (S110) a target image comprising features; and
converting (S120) the target image into a dot matrix image, wherein the dot matrix image comprises a plurality of dots, and the dot matrix image represents the features of the target image using sizes of the plurality of dots, wherein converting the target image into the dot matrix image comprises:
dividing the target image into a plurality of target regions, wherein a number of the plurality of target regions is same as a number of the plurality of dots in the dot matrix image, and the plurality of target regions correspond to the plurality of dots in the dot matrix image in a one-to-one correspondence; and
determining, for each of the plurality of target regions, a size of a dot in the dot matrix image corresponding to a target region based on a characteristic of one or more pixels in the target region, wherein determining the size of the dot in the dot matrix image corresponding to the target region comprises:
determining whether the target region is a foreground region or a background region;
determining the size of the dot corresponding to the target region as a first size in response to the target region being the background region, wherein the first size is a fixed value; and
determining the size of the dot corresponding to the target region as a second size in response to the target region being the foreground region, wherein the second size is different from the first size.

2. The method of claim 1, wherein the target image is a grayscale frame, or, the method further comprises: converting the target image into the grayscale frame in response to the target image being a color image; and
wherein determining the size of the dot in the dot matrix image corresponding to the target region based on the one or more pixels in the target region comprises:
determining the size of the dot in the dot matrix image corresponding to the target region based on a grayscale value of the one or more pixels in the target region.

3. The method of claim 1, wherein determining whether the target region is the foreground region or the background region comprises:
determining whether the target region is the foreground region or the background region based on a grayscale value of the pixel in the target region,
wherein whether the target region is the foreground region or the background region is determined based on a grayscale value of a central pixel in the target region; or
wherein whether the target region is the foreground region or the background region is determined based on a mean of grayscale values of pixels in the target region.

4. The method of claim 1, wherein determining whether the target region is the foreground region or the background region comprises:
comparing a grayscale value of each of pixels in the target region with a grayscale threshold, and determining a number of pixels with grayscale values greater than the grayscale threshold;
determining a ratio of the number of pixels with the grayscale values greater than the grayscale threshold to a total number of the pixels in the target region; and
determining whether the target region is the foreground region or the background region based on a comparison between the ratio and a ratio threshold.

5. The method of claim 1, wherein in response to the target region being the foreground region, the size of the dot in the dot matrix image corresponding to the target region is in a positive correlation or a negative correlation with a feature grayscale value, wherein the feature grayscale value is a grayscale value of a central pixel in the target region or a mean of grayscale values of pixels in the target region.

6. The method of claim 1, wherein determining the size of the dot in the dot matrix image corresponding to the target region based on the characteristic of the one or more pixels in the target region comprises:
identifying a background region of the target image;
determining whether the target region is a foreground region or the background region based on a ratio of a number of pixels in the target region which are in the background region to a total number of pixels in the target region; and
determining the size of the dot in the dot matrix image corresponding to the target region based on whether the target region is the foreground region or the background region, wherein the background region corresponds to a fixed first size, and the foreground region corresponds to a fixed or variable second size, and the second size is larger or smaller than the first size.

7. The method of any one of claims 1 to 6, further comprising:
obtaining video data; and
obtaining the target image from the video data, wherein the target image is at least one image frame in the video data.

8. The method of any one of claims 1 to 6, further comprising:
receiving an input on a touch screen from a user, and determining a plurality of target dots around a position touched by the user; and
presenting a variation effect based on the plurality of target dots.

9. The method of claim 8, wherein in response to a target region being a background region, a target dot is of a first size; in response to a target region being a foreground region, the target dot is of a second size, and the second size is larger than the first size; and presenting the variation effect based on the plurality of target dots comprises:
in response to a region corresponding to a target dot being the background region, a size of the target dot gradually changes from a third size to the first size, wherein the third size is larger than the first size; or
in response to the region corresponding to the target dot being the foreground region, the size of the target dot gradually changes from a fourth size to the second size, wherein the fourth size is smaller than the second size.

10. A computer-readable storage medium (711) with computer-readable instructions stored thereon, wherein the computer-readable instructions, when executed by a processor (701), cause the processor (701) to implement the method of any one of claims 1 to 9.

11. A computer program comprising instructions which, when the program is executed by a computer (700), cause the computer (700) to carry out the method of any one of claims 1 to 9.

12. An electronic device, comprising:
a plurality of light-emitting units arranged in a matrix;
an image processing unit configured to implement the method of any one of claims 1 to 9 to obtain a dot matrix image;
a light-emitting control unit configured to control the plurality of light-emitting units to emit light based on information in the dot matrix image.

13. The electronic device of claim 12, wherein dots in the dot matrix image correspond to the plurality of light-emitting units in a one-to-one correspondence, the light-emitting control unit is configured to control a corresponding light emitting unit not to emit light by identifying a dot in the dot matrix image for representing a background region; and the light-emitting control unit is configured to control a corresponding light-emitting unit to emit light by identifying a dot in the dot matrix image for representing a foreground region, or
wherein the light-emitting control unit is configured to control a plurality of dot matrix images to be played to form an animation effect.

## Patentansprüche

1. Bildverarbeitungsverfahren, umfassend:
Erhalten (S110) eines Zielbildes, umfassend Merkmale; und
Umwandeln (S120) des Zielbildes in ein Punktmatrixbild, wobei das Punktmatrixbild eine Vielzahl von Punkten umfasst, und das Punktmatrixbild die Merkmale des Zielbildes unter Verwendung von Größen der Vielzahl von Punkten darstellt, wobei das Umwandeln des Zielbildes in das Punktmatrixbild umfasst:
Unterteilen des Zielbildes in eine Vielzahl von Zielregionen, wobei eine Anzahl der Vielzahl von Zielregionen gleich einer Anzahl der Vielzahl von Punkten in dem Punktmatrixbild ist, und die Vielzahl von Zielregionen der Vielzahl von Punkten in dem Punktmatrixbild in einer Eins-zu-Eins-Entsprechung entspricht; und
Bestimmen, für jede der Vielzahl von Zielregionen, einer Größe eines Punktes in dem Punktmatrixbild entsprechend einer Zielregion basierend auf einer Eigenschaft von einem oder mehreren Pixeln in der Zielregion, wobei das Bestimmen der Größe des Punktes in dem Punktmatrixbild entsprechend der Zielregion umfasst:
Bestimmen, ob die Zielregion eine Vordergrundregion oder eine Hintergrundregion ist;
Bestimmen der Größe des Punktes entsprechend der Zielregion als eine erste Größe als Reaktion darauf, dass die Zielregion die Hintergrundregion ist, wobei die erste Größe ein fester Wert ist; und
Bestimmen der Größe des Punktes entsprechend der Zielregion, als eine zweite Größe als Reaktion darauf, dass die Zielregion die Vordergrundregion ist, wobei sich die zweite Größe von der ersten Größe unterscheidet.

2. Verfahren nach Anspruch 1, wobei das Zielbild ein Graustufeneinzelbild ist, oder das Verfahren ferner umfasst: Umwandeln des Zielbildes in das Graustufeneinzelbild als Reaktion darauf, dass das Zielbild ein Farbbild ist; und
wobei das Bestimmen der Größe des Punktes in dem Punktmatrixbild entsprechend der Zielregion basierend auf dem einen oder den mehreren Pixeln in der Zielregion umfasst:
Bestimmen der Größe des Punktes in dem Punktmatrixbild entsprechend der Zielregion, basierend auf einem Graustufenwert des einen oder der mehreren Pixel in der Zielregion.

3. Verfahren nach Anspruch 1, wobei das Bestimmen, ob die Zielregion die Vordergrundregion oder die Hintergrundregion ist, umfasst:
Bestimmen, ob die Zielregion die Vordergrundregion oder die Hintergrundregion ist basierend auf einem Graustufenwert des Pixels in der Zielregion,
wobei basierend auf einem Graustufenwert eines zentralen Pixels in der Zielregion bestimmt wird, ob die Zielregion die Vordergrundregion oder die Hintergrundregion ist; oder
wobei basierend auf einem Mittelwert von Graustufenwerten von Pixeln in der Zielregion bestimmt wird, ob die Zielregion die Vordergrundregion oder die Hintergrundregion ist.

4. Verfahren nach Anspruch 1, wobei das Bestimmen, ob die Zielregion die Vordergrundregion oder die Hintergrundregion ist, umfasst:
Vergleichen eines Graustufenwerts jedes der Pixel in der Zielregion mit einer Graustufenschwelle und Bestimmen einer Anzahl von Pixeln mit Graustufenwerten größer als die Graustufenschwelle;
Bestimmen eines Verhältnisses der Anzahl von Pixeln mit den Graustufenwerten größer als die Graustufenschwelle zu einer Gesamtanzahl der Pixel in der Zielregion; und
Bestimmen, ob die Zielregion die Vordergrundregion oder die Hintergrundregion ist, basierend auf einem Vergleich zwischen dem Verhältnis und einer Verhältnisschwelle.

5. Verfahren nach Anspruch 1, wobei als Reaktion darauf, dass die Zielregion die Vordergrundregion ist, die Größe des Punktes in dem Punktmatrixbild entsprechend der Zielregion in einer positiven Korrelation oder einer negativen Korrelation mit einem Merkmalsgraustufenwert steht, wobei der Merkmalsgraustufenwert ein Graustufenwert eines zentralen Pixels in der Zielregion oder ein Mittelwert von Graustufenwerten von Pixeln in der Zielregion ist.

6. Verfahren nach Anspruch 1, wobei das Bestimmen der Größe des Punktes in dem Punktmatrixbild entsprechend der Zielregion basierend auf der Eigenschaft des einen oder der mehreren Pixel in der Zielregion umfasst:
Identifizieren einer Hintergrundregion des Zielbildes;
Bestimmen, ob die Zielregion eine Vordergrundregion oder die Hintergrundregion ist, basierend auf einem Verhältnis einer Anzahl von Pixeln in der Zielregion, die sich in der Hintergrundregion befinden, zu einer Gesamtanzahl von Pixeln in der Zielregion; und
Bestimmen der Größe des Punktes in dem Punktmatrixbild entsprechend der Zielregion, basierend darauf, ob die Zielregion die Vordergrundregion oder die Hintergrundregion ist, wobei die Hintergrundregion einer festen ersten Größe entspricht und die Vordergrundregion einer festen oder variablen zweiten Größe entspricht, und die zweite Größe größer oder kleiner als die erste Größe ist.

7. Verfahren nach einem der Ansprüche 1 bis 6, ferner umfassend:
Erhalten von Videodaten; und
Erhalten des Zielbildes aus den Videodaten, wobei das Zielbild mindestens ein Einzelbild in den Videodaten ist.

8. Verfahren nach einem der Ansprüche 1 bis 6, ferner umfassend:
Empfangen einer Eingabe auf einem Berührungsbildschirm von einem Benutzer und Bestimmen einer Vielzahl von Zielpunkten um eine durch den Benutzer berührte Position herum; und
Darstellen eines Variationseffekts basierend auf der Vielzahl von Zielpunkten.

9. Verfahren nach Anspruch 8, wobei als Reaktion darauf, dass eine Zielregion eine Hintergrundregion ist, ein Zielpunkt eine erste Größe vorweist; als Reaktion darauf, dass eine Zielregion eine Vordergrundregion ist, der Zielpunkt eine zweite Größevorweist und die zweite Größe größer als die erste Größe ist; und das Darstellen des Variationseffekts basierend auf der Vielzahl von Zielpunkten umfasst:
als Reaktion darauf, dass eine Region entsprechend einem Zielpunkt die Hintergrundregion ist, ändert sich eine Größe des Zielpunkts allmählich von einer dritten Größe zu der ersten Größe, wobei die dritte Größe größer als die erste Größe ist; oder
als Reaktion darauf, dass die Region entsprechend dem Zielpunkt die Vordergrundregion ist, ändert sich die Größe des Zielpunkts allmählich von einer vierten Größe zu der zweiten Größe, wobei die vierte Größe kleiner als die zweite Größe ist.

10. Computerlesbares Speichermedium (711) mit darauf gespeicherten computerlesbaren Anweisungen, wobei die computerlesbaren Anweisungen, wenn sie durch einen Prozessor (701) ausgeführt werden, den Prozessor (701) veranlassen, das Verfahren nach einem der Ansprüche 1 bis 9 zu implementieren.

11. Computerprogramm, umfassend Anweisungen, die, wenn das Programm durch einen Computer (700) ausgeführt wird, den Computer (700) veranlassen, das Verfahren nach einem der Ansprüche 1 bis 9 vorzunehmen.

12. Elektronische Vorrichtung, umfassend:
eine Vielzahl von lichtemittierenden Einheiten, die in einer Matrix angeordnet sind;
eine Bildverarbeitungseinheit, die konfiguriert ist, um das Verfahren nach einem der Ansprüche 1 bis 9 zu implementieren, um ein Punktmatrixbild zu erhalten;
eine lichtemittierende Steuereinheit, die konfiguriert ist, um die Vielzahl von lichtemittierenden Einheiten zu steuern, um basierend auf Informationen in dem Punktmatrixbild Licht zu emittieren.

13. Elektronische Vorrichtung nach Anspruch 12, wobei Punkte in dem Punktmatrixbild der Vielzahl von lichtemittierenden Einheiten in einer Eins-zu-Eins-Entsprechung entsprechen, die lichtemittierende Steuereinheit konfiguriert ist, um eine entsprechende lichtemittierende Einheit zu steuern, um kein Licht zu emittieren, durch das Identifizieren eines Punkts in dem Punktmatrixbild zum Darstellen einer Hintergrundregion; und die lichtemittierende Steuereinheit konfiguriert ist, um eine entsprechende lichtemittierende Einheit zu steuern, um Licht zu emittieren, durch das Identifizieren eines Punktes in dem Punktmatrixbild zum Darstellen einer Vordergrundregion, oder
wobei die lichtemittierende Steuereinheit konfiguriert ist, um eine Vielzahl von Punktmatrixbildern zu steuern, um abgespielt zu werden, um einen Animationseffekt auszubilden.

## Revendications

1. Procédé de traitement d'image, comprenant :
l'obtention (S110) d'une image cible comprenant des caractéristiques ; et
la conversion (S120) de l'image cible en une image de matrice de points, dans lequel l'image de matrice de points comprend une pluralité de points, et l'image de matrice de points représente les caractéristiques de l'image cible à l'aide des tailles de la pluralité de points, dans lequel la conversion de l'image cible en l'image de matrice de points comprend :
la division de l'image cible en une pluralité de régions cibles, dans lequel un nombre de la pluralité de régions cibles est identique à un nombre de la pluralité de points dans l'image de matrice de points, et la pluralité de régions cibles correspond à la pluralité de points dans l'image de matrice de points selon une correspondance univoque ; et
la détermination, pour chacune de la pluralité de régions cibles, d'une taille d'un point dans l'image de matrice de points correspondant à une région cible sur la base d'une caractéristique d'un ou de plusieurs pixels dans la région cible, dans lequel la détermination de la taille du point dans l'image de matrice de points correspondant à la région cible comprend :
le fait de déterminer si la région cible est une région d'avant-plan ou une région d'arrière-plan ;
la détermination de la taille du point correspondant à la région cible comme première taille en réponse au fait que la région cible est la région d'arrière-plan, dans lequel la première taille est une valeur fixe ; et
la détermination de la taille du point correspondant à la région cible comme seconde taille en réponse au fait que la région cible est la région d'avant-plan, dans lequel la seconde taille est différente de la première taille.

2. Procédé selon la revendication 1, dans lequel l'image cible est une trame en niveaux de gris, ou, le procédé comprend en outre : la conversion de l'image cible en la trame en niveaux de gris en réponse au fait que l'image cible est une image en couleur ; et
dans lequel la détermination de la taille du point dans l'image de matrice de points correspondant à la région cible sur la base du ou des pixels dans la région cible comprend :
la détermination de la taille du point dans l'image de matrice de points correspondant à la région cible sur la base d'une valeur de niveaux de gris du ou des pixels dans la région cible.

3. Procédé selon la revendication 1, dans lequel le fait de déterminer si la région cible est la région d'avant-plan ou la région d'arrière-plan comprend :
le fait de déterminer si la région cible est la région d'avant-plan ou la région d'arrière-plan sur la base d'une valeur de niveaux de gris du pixel dans la région cible,
dans lequel le fait que la région cible est la région d'avant-plan ou la région d'arrière-plan est déterminé sur la base d'une valeur de niveaux de gris d'un pixel central dans la région cible ; ou
dans lequel il est déterminé si la région cible est la région de premier plan ou la région d'arrière-plan sur la base d'une moyenne de valeurs de niveaux de gris de pixels dans la région cible.

4. Procédé selon la revendication 1, dans lequel le fait de déterminer si la région cible est la région d'avant-plan ou la région d'arrière-plan comprend :
la comparaison d'une valeur de niveaux de gris de chacun des pixels dans la région cible à un seuil de niveaux de gris, et la détermination d'un nombre de pixels présentant des valeurs de niveaux de gris supérieures au seuil de niveaux de gris ;
la détermination d'un rapport entre le nombre de pixels dont les valeurs de niveaux de gris sont supérieures au seuil de niveaux de gris et un nombre total des pixels dans la région cible ; et
le fait de déterminer si la région cible est la région d'avant-plan ou la région d'arrière-plan sur la base d'une comparaison entre le rapport et un seuil de rapport.

5. Procédé selon la revendication 1, dans lequel, en réponse au fait que la région cible est la région d'avant-plan, la taille du point dans l'image de matrice de points correspondant à la région cible est en corrélation positive ou en corrélation négative avec une valeur de niveaux de gris de caractéristique, dans lequel la valeur de niveaux de gris de caractéristique est une valeur de niveaux de gris d'un pixel central dans la région cible ou une moyenne de valeurs de niveaux de gris de pixels dans la région cible.

6. Procédé selon la revendication 1, dans lequel la détermination de la taille du point dans l'image de matrice de points correspondant à la région cible sur la base de la caractéristique du ou des pixels dans la région cible comprend :
l'identification d'une région d'arrière-plan de l'image cible ;
le fait de déterminer si la région cible est une région d'avant-plan ou la région d'arrière-plan sur la base d'un rapport entre un nombre de pixels dans la région cible qui sont dans la région d'arrière-plan et un nombre total de pixels dans la région cible ; et
la détermination de la taille du point dans l'image de matrice de points correspondant à la région cible selon que la région cible est la région d'avant-plan ou la région d'arrière-plan, dans lequel la région d'arrière-plan correspond à une première taille fixe, et la région d'avant-plan correspond à une deuxième taille fixe ou variable, et la deuxième taille est supérieure ou inférieure à la première taille.

7. Procédé selon l'une quelconque des revendications 1 à 6, comprenant en outre :
l'obtention de données vidéo ; et
l'obtention de l'image cible à partir des données vidéo, dans lequel l'image cible est au moins une trame d'image dans les données vidéo.

8. Procédé selon l'une quelconque des revendications 1 à 6, comprenant en outre :
la réception d'une entrée sur un écran tactile provenant d'un utilisateur, et la détermination d'une pluralité de points cibles autour d'une position touchée par l'utilisateur ; et
la présentation d'un effet de variation basé sur la pluralité de points cibles.

9. Procédé selon la revendication 8, dans lequel, en réponse au fait qu'une région cible est une région d'arrière-plan, un point cible est d'une première taille ; en réponse au fait qu'une région cible est une région d'avant-plan, le point cible est d'une deuxième taille, et la deuxième taille est supérieure à la première taille ; et la présentation de l'effet de variation sur la base de la pluralité de points cibles comprend :
en réponse au fait qu'une région correspondant à un point cible est la région d'arrière-plan, une taille du point cible change progressivement d'une troisième taille à la première taille, dans lequel la troisième taille est supérieure à la première taille ; ou
en réponse au fait que la région correspondant au point cible est la région d'avant-plan, la taille du point cible passe progressivement d'une quatrième taille à la deuxième taille, la quatrième taille étant inférieure à la deuxième taille.

10. Support de stockage lisible par ordinateur (711) sur lequel sont stockées des instructions lisibles par ordinateur, dans lequel les instructions lisibles par ordinateur, lorsqu'elles sont exécutées par un processeur (701), amènent le processeur (701) à mettre en œuvre le procédé selon l'une quelconque des revendications 1 à 9.

11. Programme informatique comprenant des instructions, qui, lorsque le programme est exécuté par un ordinateur (700), amènent l'ordinateur (700) à réaliser le procédé selon l'une quelconque des revendications 1 à 9.

12. Dispositif électronique, comprenant :
une pluralité d'unités électroluminescentes agencées dans une matrice ;
une unité de traitement d'image configurée pour mettre en œuvre le procédé selon l'une quelconque des revendications 1 à 9 pour obtenir une image de matrice de points ;
une unité de commande électroluminescente configurée pour commander la pluralité d'unités électroluminescentes pour émettre de la lumière sur la base d'informations dans l'image de matrice de points.

13. Dispositif électronique selon la revendication 12, dans lequel des points dans l'image de matrice de points correspondent à la pluralité d'unités électroluminescentes selon une correspondance univoque, l'unité de commande électroluminescente est configurée pour commander à une unité électroluminescente correspondante de ne pas émettre de lumière en identifiant un point dans l'image de matrice de points pour représenter une région d'arrière-plan ; et l'unité de commande électroluminescente est configurée pour commander une unité électroluminescente correspondante pour émettre de la lumière en identifiant un point dans l'image de matrice de points pour représenter une région d'avant-plan, ou
dans lequel l'unité de commande électroluminescente est configurée pour commander une pluralité d'images de matrice de points devant être lues pour former un effet d'animation.
